# EUROPEAN PATENT SPECIFICATION

(11) **EP 0 586 718 B1**
(45) Date of publication and mention of the grant of the patent: **12.03.1997**
(21) Application number: 92113986.1
(22) Date of filing: 17.08.1992
(51) Int. Cl.: H01M 10/34, H01M 10/44

(54) **Method of manufacturing sealed type nickel-hydrogen cell**
Verfahren zur Herstellung von gasdichter Nickelwasserstoffzelle
Méthode de fabrication de cellule nickel-hydrogène du type étanche

(43) Date of publication of application: 16.03.1994
(73) Proprietor: FURUKAWA DENCHI KABUSHIKI KAISHA, Yokohama-shi, Kanagawa-ken (JP)
(72) Inventor: Furukawa, Jun, Iwaki Jigyosho, Furukawa Denchi, Iwaki-shi, Fukushima-ken (JP)
(74) Representative: Schmidt-Evers, Jürgen, Dipl.-Ing.

(56) References cited:
- PATENT ABSTRACTS OF JAPAN vol. 15, no. 86 (E-1039)28 February 1991
- CHEMICAL ABSTRACTS, vol. 113, no. 8, 20 August 1990, Columbus, Ohio, US; abstract no. 62625t, Y. ITO ET AL. 'Manufacture of sealed nickel-hydrogen batteries' page 201 ;
- CHEMICAL ABSTRACTS, vol. 117, no. 10, 7 September 1992, Columbus, Ohio, US; abstract no. 93744t, T. IWAKI ET. AL. 'Forming of nickel-hydrogen batteries' page 211 ;

## Description

This invention relates to a method of manufacturing a sealed type nickel-hydrogen cell.

It is said heretofore that a method applicable to manufacturing of sealed type nickel-hydrogen cell employing a hydrogen-occlusion alloy electrode has much in common with that used to manufacture a nickel-cadmium, so that it is possible to divert the existing manufacturing facilities of the latter to manufacturing of the former and such diversion is viewed more advantageous in terms of equipment investment.

In one example of the sealed type nickel-hydrogen cell manufacturing method, well-known pasted type nickel electrode plates and pasted type hydrogen electrode plates are stacked in a laminate fashion with a separator placed therebetween, and rolled up together to be inserted into a cylindrical can. As an electrolyte, an aqueous solution of 7N KOH is then put into the can and a lid is then attached thereto by caulking for airtight sealing of the can. This sealed type cylindrical nickel-hydrogen cell so fabricated is subjected to a formation process in which it is charged and discharged for the formation treatment of both the nickel and the hydrogen electrode plates.

In another example of said sealed type nickel-hydrogen cell, the pasted type nickel electrode and hydrogen electrode plates are stacked also in a laminate fashion with a separator placed therebetween and inserted flat in a square can. As an electrolyte, an aqueous solution of 7N KOH is put into the can and pasted, a lid is then attached thereto by means of laser welding to hermetically seal the can. This square sealed type nickel-hydrogen cell so fabricated is put in a formation process wherein it is charged and discharged for the formation treatment of both the nickel and the hydrogen electrode plates.

Either type of the above mentioned sealed type nickel-hydrogen cells comes to show its rated capacity at a low discharge rate such as 0.2C when treated with one to three cycles of charge-discharge operation in the above-mentioned formation process. However, the discharge capacity it can provide at a 1C or higher discharge rate is much smaller, so that the cell has to be charged and discharged repeatedly for ten cycles or more in the formation process in order to increase said capacity, this charge-discharge operation repeated for so many times making the formation process considerably more troublesome and time-consuming and resulting in higher production cost and other inconveniences.

From Chemical Abstracts, vol. 117, no. 10, 7 September 1992, abstract no. 93744t, & JP-A-04065067 it is known to form batteries by low-temperature charging at 0 - 10 °C and high-temperature discharging at 40 - 60 °C.

Furthermore, Patent Abstracts of Japan, vol. 15, no. 86, (E-1039) 28 February 1991, & JP-A-23001971 discloses charging a battery, having a hydrogen storage alloy electrode capable of reversely absorbing-desorbing hydrogen, in an atmosphere of 25°C for 15 hours and storing the battery in its charged state at 40 - 100 °C in order to increase the initial capacity of the battery. The sealed metal-hydrogen alkaline storage battery is assembled of the hydrogen storage alloy electrode, a nickel positive electrode and an aqueous solution.

Chemical Abstratcs, vol. 113, no. 8, 20 August 1990, abstract no. 62625t, & JP-A-01267966 teaches that a battery is rested for 0.5 - 5 days at 30 - 60 °C while the anodes are loaded with H, i.e. while the battery is kept in its charged state, so as to improve the discharge capacity of the battery.

The object of the present invention is to provide a method of manufacturing a sealed type nickel-hydrogen cell wherein the above-noted inconveniences have been eliminated.

According to the invention, this object is achieved by a method of manufacturing a sealed nickel-hydrogen cell, comprising the steps of providing a laminate comprising a nickel electrode, a hydrogen electrode and a separator interposed between the electrodes, placing the laminate and an electrolyte in a container and sealing the container to form a sealed cell, charging and discharging the sealed cell for at least one cycle, and heating the sealed cell in its discharged state to a temperature of 30°C - 60°C for a period of 6 to 48 hours sufficient to maximize the discharge capacity of the cell.

The working mechanism of the present invention is yet to be clarified. It may be that although there occurs with one or more cycles of the charge-discharge operation applied to the cell a kind of pulverisation whereby many fine cracks are formed in hydrogen-occlusion alloy particles contained in the hydrogen-occlusion electrode to result in a remarkable increase of the surface area of the allow particles, the electrolyte nevertheless cannot infiltrate sufficiently into all the allow particles due to its comparatively high viscosity, and as a result the surface area actually contributing to the electrochemical reaction remains small. It is further assumed that when the cell in the above condition is kept at the above-mentioned high temperature for a predetermined length of time, the viscosity of the electrolyte becomes lower and the electrolyte infiltrates more thoroughly into the alloy particles to increase the effective surface area contributing to the electrochemical reaction, and as a result there is obtained highly increased discharge capacity at a 1C or higher rate. In this case, the greatest high-rate discharge capacity is obtained when the cell is kept at a temperature in the range of 30°C to 60°C for 48 hours to 6 hours at least.

In the following, working examples of the present invention will be described with reference to the accompanying drawing. Commercially available La, Ni, and Al were weighed and mixed to a predetermined composition ratio, and then heat-melted by means of an arc melting method.
As an example, they were so mixed as to produce an alloy having composition of LaNi_{4.5} Al_{0.5}, said alloy being used as the hydrogen-occlusion alloy for the negative electrode. This alloy was pulverized into fine alloy powder of 250-mesh size or smaller. Added to this pulverized material were fluorocarbon resin powder for 5 wt.% and, as an electroconductive agent, carbonyl nickel powder for 20 wt. %. After mixing them an aqueous solution of viscosity intensifier agent such as CMC was added to the mixture to make a slurry thereof. This slurry was applied to perforated sheet and dried up thereon. After that, it was pressed to a predetermined thickness and heat-treated for sintering of the resin particles, thereby manufacturing a pasted type hydrogen-occlusion electrode.

This alloy electrode was used as the negative electrode, and a well-known pasted type nickel electrode as the positive electrode.
They were stacked in a laminate fashion together with a nylon separator placed therebetween, rolled up together and put into a cylindrical can. As an electrolyte, an aqueous solution of 7N KOH was put into the can and a lid was attached thereto by caulking for airtight sealing of the can, thereby fabricating a cylindrical sealed type nickel electrode-controlled 100mAh nickel-hydrogen cell.

This sealed type nickel-hydrogen cell fabricated in the above manner was subjected to at least one cycle of charge-discharge operation and thereafter kept at a temperature in the range of about 30°C to 60°C for a desired length of time in accordance with the formation process of this invention, and finally fully charged to complete the formation thereof. As a result, it has been confirmed that it is possible to obtain with one cycle of the charge-discharge operation a sealed type nickel-hydrogen cell formed to have the rated high discharge capacity at a 1C or higher discharge rate and capable of providing the high capacity as from the initial rapid discharge while doing away with the time-consuming and troublesome repetition of the charge-discharge operation for 10 times or more as required in the conventional formation process.

In order to concretely find out the effect of the above-described treatment in the formation process according to the present invention, a plurality of the cylindrical sealed type nickel-hydrogen cells fabricated in the above-mentioned manner were prepared for comparative testing to compare preferable working examples of the present invention with another comparative example. More specifically, said plurality of the cells were first subjected to one cycle charge-discharge operation in which they were charged with 0.1C current at 20°C up to 150% of the rated capacity and then discharged at the same current rate to the cell voltage of 1.0V. They were divided into different groups, put in thermostatic apparatus and kept therein at different temperatures for different lengths of time, respectively. After this treatment, they were invariably charged with 0.2C current at 20°C up to 150% of the rated capacity to complete the formation of both the nickel and the hydrogen electrodes.

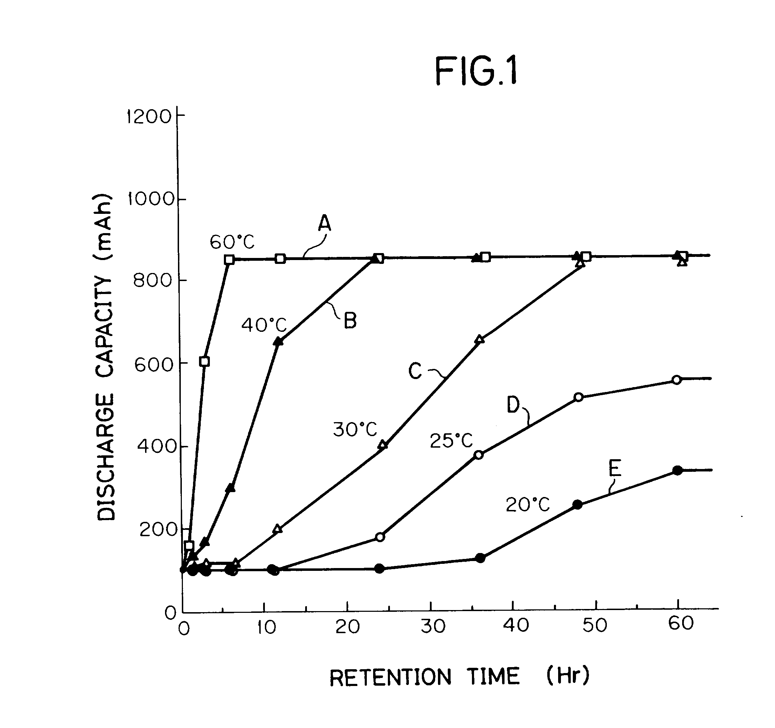

These test cells treated under the above-mentioned different conditions for the formation as described in the foregoing were measured of their respective discharge capacities by discharging them with 3C current at 0°C to the cell voltage of 1.0V. The results so obtained are as shown in Fig. 1. In the drawing, A,B,C,D and E refer to the characteristic curves for the discharge capacities of the cells obtained when the cells were kept consistently at 60°C, 40°C, 30°C, 25°C or 20°C, respectively, and measured thereof at the time intervals of 10, 20, 30, 40, 50 and 60 hours while under this formation treatment.

As is clear from the foregoing, the cell becomes capable of providing the largest discharge capacity when it has been kept at 30°C for 48 hours, at 40°C for 24 hours and at 60°C for 6 hours, respectively. This largest discharge capacity corresponds to that obtained with ten or more cycles of the charge-discharge operation applied in the conventional formation process. This indicates that, according to the present invention, there can be obtained a cell or battery so formed with one cycle of the charge-discharge operation as to be capable of providing a large high-rate discharge capacity if kept thereafter at a high temperature in the range of 30°C to 60°C in the formation process, said cell or battery suited for a rapid discharge use.

There have been observed some improvements in terms of the high-rate discharage capacity even when the cell was kept at lower temperatures such as 20°C and 25°C for the formation treatment, but none of them was effective enough to bring about the required high discharge capacity.

When the cell was kept at a temperature much higher than 60°C in said formation process, the result was unfavorable, including a thermal deterioration of the electrode plates and the separator. On the other hand, keeping the cell at a temperature lower than 30°C and close to 25°C for the formation treatment produced no effect.

The cell kept at a temperature ranging from about 30°C to 60°C prior to initiation of the formation process produced no effect either. In this case, there was seen even an adverse effect.

Although in the above-described working examples was taken up the instance where only one cycle of the charge-discharge operation was applied for the formation treatment, said charge-discharge operation may be repeated for two or more times and such is considered even recommendable if such brings about more cracks in the alloy particles and consequently more infiltration thereinto of the electrolyte. Needless to say, there is no use applying such repetitive charge-discharge operation unless it brings about a high discharge capacity greater than the largest obtainable with one cycle of said operation.

According to the present invention as described in the foregoing a sealed type nickel-hydrogen cell formed through the formation process wherein the cell is subjected to at least one cycle of the charge-discharge operation and thereafter kept at a temperature in the range of about 30°C to 60°C for a predetermined length of time for the formation treatment provides a high discharge capacity even at a 1C or higher discharge rate, thus assuring the high discharge capacity as from the initial rapid discharge operation, while eliminating such troublesome operation and disadvantage as ten or more cycles of the continuous charge-discharge operation required in the conventional formation process to obtain a cell or battery having a higher high-rate discharge capacity and the resultant greater power consumption that pushes up the production cost.

Fig. 1 is a graphic chart showing relationships between the treatment temperatures and time lengths in the formation process and the discharge capacities obtained from the respective cells.

## Claims

1. A method of manufacturing a sealed nickel-hydrogen cell, comprising the steps of
a) providing a laminate comprising a nickel electrode, a hydrogen electrode and a separator interposed between said electrodes;
b) placing said laminate and an electrolyte in a container and sealing said container to form a sealed cell;
c) charging and discharging said sealed cell for at least one cycle; and
d) heating said sealed cell in its discharged state to a temperature of 30°C - 60 °C for a period of 6 to 48 hours sufficient to maximize the discharge capacity of the cell.

2. A method according to claim 1,
**characterized in that**
the charging and discharging of said sealed cell is for one cycle before heating in its discharged state at a temperature of 30°C to 60 °C.

3. A method according to claim 1,
**characterised in that**
the charging and discharging of said sealed cell is for at least two cycles before heating in its discharged state at the temperature of 30°C to 60°C.

4. A method according to claim 1,
**characterized in that**
the heating of said sealed cell in its discharged state is at a temperature of 30°C for 48 hours.

5. A method according to claim 1,
**characterized in that**
the heating of said sealed cell in its discharged state is at a temperature of about 40°C for about 24 hours.

6. A method according to claim 1,
**characterized in that**
the heating of said sealed cell in its discharged state is at a temperature of 60°C for 6 hours.

## Patentansprüche

1. Verfahren zur Herstellung einer abgedichteten Nickelwasserstoffzelle, welches die folgenden Schritte umfaßt:
a) Bereitstellen eines Laminats, das eine Nickelelektrode, eine Wasserstoffelektrode und ein zwischen den Elektroden angeordnetes Trennelement enthält,
b) Überführen des Laminats und eines Elektrolyten in einen Behälter und Abdichten des Behälters unter Bildung einer abgedichteten Zelle,
c) Laden und Entladen der abgedichteten Zelle für mindestens einen Zyklus, und
d) ausreichendes Erhitzen der abgedichteten Zelle in ihrem entladenen Zustand auf eine Temperatur von 30°C bis 60°C für eine Zeitspanne von 6 bis 48 Stunden, um die Entladekapazität der Zelle zu maximieren.

2. Verfahren nach Anspruch 1, dadurch gekennzeichnet, daß die abgedichtete Zelle für einen Zyklus geladen und entladen wird, bevor sie in ihrem entladenen Zustand auf eine Temperatur von 30°C bis 60°C erhitzt wird.

3. Verfahren nach Anspruch 1, dadurch gekennzeichnet, daß die abgedichtete Zelle für mindestens 2 Zyklen geladen und entladen wird, bevor sie in ihrem entladenen Zustand auf eine Temperatur von 30°C bis 60°C erhitzt wird.

4. Verfahren nach Anspruch 1, dadurch gekennzeichnet, daß die Zelle in ihrem entladenen Zustand bei einer Temperatur von 30°C für eine Zeitspanne von 48 Stunden erhitzt wird.

5. Verfahren nach Anspruch 1, dadurch gekennzeichnet, daß die abgedichtete Zelle in ihrem entladenen Zustand bei etwa 40°C für etwa 24 Stunden erhitzt wird.

6. Verfahren nach Anspruch 1, dadurch gekennzeichnet, daß die abgedichtete Zelle in ihrem entladenen Zustand bei einer Temperatur von 60°C für 6 Stunden erhitzt wird.

## Revendications

1. Procédé de fabrication d'une cellule nickel-hydrogène étanche comprenant les étapes consistant
a) à fournir un stratifié comprenant une électrode de nickel, une électrode à hydrogène et un séparateur posé entre lesdites électrodes;
b) à placer ledit stratifié et un électrolyte dans un récipient et à sceller ledit récipient afin de former une cellules étanche,
c) à effectuer au moins un cycle de charge-décharge de ladite cellule étanche, et
d) à chauffer ladite cellule étanche à l'état déchargé à une température comprise entre 30 °C et 60 °C pendant une durée de 6 à 48 heures, c'est-à-dire suffisamment pour que la capacité de décharge de la cellule soit maximale.

2. Procédé conforme à la revendication 1, caractérisé en ce que l'on effectue un cycle de charge-décharge de ladite cellule étanche avant de la chauffer, à l'état déchargé, à une température comprise entre 30 °C et 60 °C.

3. Procédé conforme à la revendication 1, caractérisé en ce que l'on effectue au moins deux cycles de charge-décharge de ladite cellule étanche avant de la chauffer, à l'état déchargé, à une température comprise entre 30 °C et 60 °C.

4. Procédé conforme à la revendication 1 caractérisé en ce que l'on chauffe ladite cellule étanche, à l'état déchargé, pendant 48 heures à 30 °C.

5. Procédé conforme à la revendication 1, caractérisé en ce que l'on chauffe ladite cellule étanche, à l'état déchargé, pendant environ 24 heures à environ 40 °C.

6. Procédé conforme à la revendication 1, caractérisé en ce que l'on chauffe ladite cellule étanche, à l'état déchargé, pendant 6 heures à 60 °C.
